(19) Europäisches Patentamt / European Patent Office / Office européen des brevets

(11) **EP 2 887 013 B1**

(12) **EUROPEAN PATENT SPECIFICATION**

(45) Date of publication and mention
of the grant of the patent:
**10.08.2016  Bulletin 2016/32**

(51) Int Cl.:
***G01C 19/5747*** *(2012.01)*

(21) Application number: **13290317.0**

(22) Date of filing: **18.12.2013**

(54) **MEMS sensor for measuring z-axis angular rate**

MEMS-Sensor zur Messung der Z-Achsen-Winkelgeschwindigkeit

Capteur MEMS pour mesurer la vitesse angulaire autour de l'axe z

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.06.2015  Bulletin 2015/26**

(73) Proprietor: **Tronic's Microsystems
38920 Crolles (FR)**

(72) Inventors:
 • **Kergueris, Christophe
  38000 Grenoble (FR)**
 • **Ribetto, Luca
  38000 Grenoble (FR)**
 • **Signoretti, Ricardo
  61020 Sant'Angelo in Lizzola (PU) (IT)**

(74) Representative: **Cabinet Laurent & Charras
Le Contemporain
50 Chemin de la Bruyère
69574 Dardilly Cedex (FR)**

(56) References cited:
**US-A1- 2003 154 788     US-A1- 2010 313 657
US-B1- 8 453 504**

## Description

## Technical Field

The invention relates to a microelectro-mechanical sensor device for measuring z-axis angular rate comprising:

a) a substrate defining a substrate plane and a z-axis perpendicular to the substrate plane,

b) a first vibratory structure having a first shuttle-mass and a first proof-mass, the first proof-mass being coupled to the first shuttle-mass by a first sense-mode spring,

c) a second vibratory structure having a second shuttle-mass and a second proof-mass, the second proof-mass being coupled to the second shuttle-mass by a second sense-mode spring,

d) a first suspension structure for suspending the first shuttle-mass above the substrate flexibly in drive-mode direction (x),

e) a second suspension structure for suspending the second shuttle-mass above the substrate flexibly in drive-mode direction (x),

f) the first and second shuttle-masses being suspended above the substrate for movement at least in drive-mode direction (x), wherein drive-mode direction and sense-mode direction are parallel to the substrate plane,

g) the first and second vibratory structures being elastically coupled to each other,

h) a first and a second drive electrode structure for the first and second shuttle-mass, respectively, for generating drive-mode movements of said shuttle-masses in drive-mode direction,

i) a first and a second sensing electrode structure for the first and second proof-mass, respectively, for detecting and/or activating sense-mode movements of said proof-masses in sense-mode direction,

## Background Art

Micromechanical sensor devices for detecting z-axis rotation are well known in the art and are used in many commercial and military applications such as navigation, vehicle skid control or platform stabilization.

Some basic principles of a vibratory rate gyroscope are described in the chapter background of US 6,230,563 (Integrated Micro Instruments). Based on these principles US 6,230,563 discloses a rotation rate sensor with two proof-masses mounted in a suspension system anchored to a substrate. The suspension has two principal modes of compliance, one of which is driven into oscillation. The driven oscillation combined with rotation of the substrate about an axis perpendicular to the substrate results in Coriolis acceleration along the other mode of compliance, the sense-mode. The sense-mode is designed to respond to Coriolis acceleration while suppressing the response to translational acceleration. This is accomplished using one or more rigid levers connecting the two proof-masses. The levers allow the proof-masses to move in opposite directions in response to Coriolis acceleration. The device proposed in US 6,230,563 includes a means for cancelling errors, termed quadrature error, due to imperfections in implementation of the sensor. Quadrature error cancellation utilizes electrostatic forces to cancel out undesired sense-axis motion in phase with drive-mode position.

US 2010/0139399 (Northrop Grumman LITEF) and US 2010/0116050 (LITEF) disclose a rotation rate sensor that comprises two structures which move relative to the substrate on a design plane (x-y). The two moving structures are coupled by a free floating beam to form a coupled structure such that the coupled structure has a first oscillation mode with anti-phase deflections of the moving structures in a first direction (x) on the design plane (x-y) as excitation mode. The coupled structure has a second oscillation mode as a detection mode which is excited by Coriolis accelerations when the first oscillation mode is excited and on rotation about a sensitive axis (z) of the rotation rate sensor. The structure has a central anchor to which the two mobile structures (two vibrating frames) are connected for rotation about the z-axis. At the periphery, there are additional anchors for stabilizing the vibrating frames.

There are other gyroscopes designs that use two proof-masses coupled by a lever-type element: US 2010/313657 (University of California), US 6,718,825 B1 (Honeywell), US 6,837, 108 (Honeywell), US 7,036,373 (Honeywell).

A different type of tuning-fork sensor is shown in US 7,191,653 B1 (Samsung): The tuning-fork vibrating MEMS gyroscope has two frames that are driven by corresponding comb electrodes. Each frame encloses an internal proof-mass having the shape of a frame. The sense electrodes are in the opening of the proof-mass. The drive frames are attached to a fixed support portion so that a movement in a first in-plane direction (y-axis) is possible. The sense mass is connected to the drive frame by springs that are flexible in a second inplane direction (x-axis). The two drive frames are coupled by wine-glass-shaped spring elements suppressing anti-phase movement of the drive frames in x-direction and allowing movements in y-direction.

The anti-phase proof-mass structures of the prior art are quite delicate to produce. While it is important that the desired modes (anti-phase) are well separated from the undesired modes (in-phase) this is not easy to achieve. It cannot be avoided that the production process has some variance and it is difficult to forecast effect of such imperfections on the different vibration modes.

## Summary of the invention

It is the object of the invention to create a micromechanical sensor device that belongs to the technical field initially mentioned and that has a structure that enables an easy control of the frequency of the vibration modes.

The solution of the invention is specified by the features of claim 1.

The micromechanical sensor device for measuring z-axis angular rate is based on a substrate defining a substrate plane and a z-axis perpendicular to the substrate plane. The substrate may be a thin silicon plate that is suitable for micro-machining. It is of course also possible to use other semiconductor materials or even conductive materials. The substrate typically has a thickness of less than 1 mm, e.g. of 0.5 mm or less. The substrate has to provide a stable base for the mobile structures explained below.

The device of the invention comprises two vibratory structures for implementing a tuning fork-type sensing device. There is a first vibratory structure having a first shuttle-mass and a first proof-mass, the first proof-mass being coupled to the first shuttle-mass by a first sense-mode spring. And there is a second vibratory structure having a second shuttle-mass and a second proof-mass, the second proof-mass being coupled to the second shuttle-mass by a second sense-mode spring. In the framework of the invention, a sense-mode spring is a structural element that is more flexible in sense-mode direction (y) than in drive-mode direction (x). Typically, the sense-mode spring is stiff with respect to drive-mode vibrations.

Each of the shuttle-masses is suspended above the substrate by a suspension structure. The suspension structures are flexible at least in drive-mode direction (x). To put it in other words: There is a first suspension structure for flexibly suspending the first shuttle-mass above the substrate, the flexibility being available at least in drive-mode direction (x) and there is a second suspension structure for suspending the second shuttle-mass above the substrate flexibly in drive-mode direction (x). It is to be noted that the drive-mode direction and the sense-mode direction are parallel to the substrate plane.

The first and second vibratory structures are elastically coupled to each other in order to form a tuning-fork-type sensing device.

There is a first and a second drive electrode structure for the first and second shuttle-mass, respectively, for generating drive-mode movements of said shuttle-masses in drive-mode direction. Generally speaking, the drive electrode structure is constructed in such a way that an electronic circuit (which is not part of the invention) is able to bring the shuttle-mass into a controlled (i.e. stable) drive-mode movement. This usually involves electrostatic forces to drive the shuttle mass and also to detect or sense the position of the shuttle mass.

For detecting and/or activating sense-mode movements of said proof-masses in sense-mode direction, there is a first and a second sensing electrode structure for the first and second proof-mass, respectively.

According to the invention, the device has separate structural elements for separately defining first the anti-phase frequency and then the in-phase/anti-phase frequency separation of the sense-mode.

Preferably, the device has separate structural elements for separately defining the following pair of frequencies: the anti-phase frequency and the in-phase/anti-phase frequency separation of the drive-mode;

A "separate structural element" may be e.g. an elastic beam that is flexible in a direction transverse to its longitudinal direction. In such a situation, the MEMS may comprise several (e.g. four) such beams in such a way that a modification of only one of the several (e.g. four) beams has only an influence on one mode-frequency (e.g. anti-phase drive-mode frequency). However, said modification does not influence the frequencies of the other modes (e.g of the anti-phase sense-mode).

It is not necessary that the "separate structural elements" are separated from each other by an intermediate element or by a minimum distance. It is well within the scope of the invention that a first "separate structural element" is directly connected to second "separate structural element". In particular, the first and second "separate structural element" may form two separate sections of one continuous piece of material.

It is, however, important in the concept of the invention, that a first "separate structural element" does not have a common (overlapping) part with a second "separate structural element".

A "separate structural element" does not have to be a beam-shaped element. It does-not have to be a straight elastic beam, but it may by a curved element (such as a bow-shaped element) or a meander-like element (e.g. sinuous line).

Typically, the "separate structural elements" are spring elements integrated in the layer supported at a distance above the substrate.

The desired mode in drive-direction (x) is the anti-phase drive-mode. That is, the two vibratory structures are vibrating in anti-phase. The in-phase drive-mode is an undesired mode. The invention uses the principle that the frequency of the in-phase drive-mode and/or of sense mode is shifted with respect to the frequency of the anti-phase drive-mode and/or of the sense mode, respectively.

According to a first aspect the frequency of the anti-phase drive-mode is defined by first dedicated structural elements while the frequency separation of the in-phase drive-mode is defined by second dedicated structural elements, that are different from the first dedicated structural elements. Therefore, it is possible in the course of engineering the device geometry to define the frequency of the (desired) anti-phase drive-mode first and then to shift the (undesired) in-phase drive-mode frequency to a (desired) amount away from the anti-phase drive-mode without changing the anti-phase drive-mode frequency. So it is easier to design a MEMS geometry having a desired anti-phase drive-mode frequency and the desired frequency separation of the in-phase mode from the anti-phase mode.

According to the invention, the anti-phase frequency and the in-phase/anti-phase frequency separation of the sense-mode is defined by separate structural elements. Therefore, in a similar way as described above with respect to the drive-mode, it is possible to first define the (desired) anti-phase sense-mode frequency and then to define the frequency separation of the in-phase sense-mode from the anti-phase sense mode.

The desired mode in sense-direction (y) is the anti-phase sense-mode. That is, the two sense masses are vibrating in anti-phase. The in-phase sense-mode of the sense masses is an undesired mode. It is, therefore, a goal to shift the frequency of the in-phase sense-mode with respect to the frequency of the anti-phase sense-mode. This has the advantage described above for designing the sense-mode frequency separation, namely when designing the geometric dimensions of the structural elements at issue the in-phase sense-mode frequency can be shifted without changing the anti-phase sense-mode frequency.

The first and the second aspect of the invention may be used in combination.

Providing separate structural elements as explained above is a major difference compared to the prior art sensor device disclosed in US 7,191,653 B1 (Samsung). The "wine glass shape" spring for coupling the two vibratory structures is a structural element that has a complex behaviour and that does not allow a separate tuning of the in-phase and the anti-phase. It is flexible in two different directions (drive-mode and sense-mode direction) and a change of the design to modify the flexibility in one direction is not possible without influencing at the same time the flexibility in the other direction. Each part of the "wine glass shape" structure influences the flexibility in drive direction as well as the sense direction and the in-phase as well as the anti-phase mode. The consequence is that modifying e.g. the width of a straight section of the foot part or of the cup part of the "wine glass shape" spring will influence the sense-mode as well as the drive-mode frequencies. It is, therefore, a difficult task to optimize the prior art coupling spring.

One-dimensional springs:

In a particular embodiment of the invention the separate structural elements for separately defining the in-phase and the anti-phase frequency of the drive-mode or of the sense mode are one-dimensional springs. A one-dimensional spring is flexible primarily only in one direction (e.g. main direction = x-axis). In the other directions (e.g. transverse direction = y-axis and z-axis) the flexibility is small compared to the flexibility in the main direction. Typically the structural element is substantially stiff in the transverse directions (e.g. y and z) compared to the main direction (x).

So there are several options: It is possible to use one-dimensional springs (a) only for controlling drive-mode frequencies, (b) only for controlling sense-mode frequencies, and it is also possible to use options (a) and (b) in combination.

The advantage of using one-dimensional springs is that the influence of the spring is mainly limited to either one of the drive-mode or the sense-mode. As a consequence, it is quite easy to define the vibration frequencies and the shift of the frequency of undesired vibration modes.

Drive-mode in-phase and anti-phase separation by spring series:

According to a specific embodiment the micromechanical sensor comprises two pairs of drive-mode springs, each pair substantially consisting of springs arranged in a series. This may be explained as follows: The first vibratory structure is suspended by a first suspension structure, which comprises a first and a second drive-mode spring arranged in series. In an analogous way, the second vibratory structure is suspended by a second suspension structure which comprises a third and a fourth drive-mode spring arranged in series. There is a connection structure that connects an intermediate area between the first and second drive-mode spring of the first suspension structure with an intermediate area between the third and fourth drive-mode spring of the second suspension structure (The drive-mode springs are flexible in drive-mode direction, which is in x-direction). The "intermediate area" of a pair of springs may be the junction between the two (directly connected) springs, If the two springs are connected by an intermediate block-type element, the "intermediate area" may be the block-type element. Or if there are two or more connecting elements between the two springs of the pair, the "intermediate area" may be any of the connecting elements.

In anti-phase drive-mode two of said four drive-mode springs are substantially inactive. Therefore, the anti-phase drive-mode frequency is mainly defined by the first and third drive-mode springs.

In the in-phase drive-mode all of said four drive-mode springs are active. As a consequence, the in-phase drive-mode frequency is mainly defined by each pair (namely first and second drive-mode springs on one hand and third and fourth drive-mode springs on the other hand). The frequency of the in-phase drive-mode will, therefore, be lower than the frequency of the anti-phase drive-mode.

It is, therefore, clear that "arranged in series" does not mean that the springs always "work in series".

But the springs of the series are at least able to work in series in at least one vibration mode of the vibratory structure.

Each of the four drive-mode springs can be understood to be a separate structural element for separately adjusting the in-phase/anti-phase separation of the drive-mode.

Shuttle-mass suspension:

According to a particular embodiment the micromechanical sensor is characterized in that the first and second shuttle-masses are suspended above the substrate also for movement in sense-mode direction (y). And in addition, the coupling of the shuttle-masses is such that a anti-phase movement of the shuttle-masses in sense-mode direction is suppressed. As a consequence, the desired anti-phase sense-mode of the proof-masses is not influenced by the shuttle-masses. And at the same time, the undesired in-phase sense-mode frequency is lowered due to the influence of the shuttle-masses and their suspension. It is to be noted, that, the shuttle-mass motion along x (drive-mode direction) is not perturbed by the proof-mass motion.

Suspension structure includes sense-mode spring:

In a preferred embodiment of the invention both suspension structures comprise a sense-mode spring. Therefore, each of the shuttle-masses is also able to vibrate in sense-mode direction (y).

Anchor structure:

On the substrate there may be an anchor structure comprising a first anchor post fixed to the substrate. The anchor post may be an element that rises above the upper surface of the substrate. The anchor structure may be an integral part of the substrate. According to a well known technique, the substrate may be provided with cavities by etching the substrate surface. The anchor structure may be defined by areas that are alongside the cavities. Preferably, there are at least three and, more preferably, at least four anchor posts per vibratory structure (see below). In a particular embodiment there are eight anchor posts for each vibratory structure.

Suspension structure:

In a particular embodiment of the invention the sense-mode spring of said first suspension structure is connected between the first anchor post and one end of said pair of first and second drive-mode springs of said first suspension structure, wherein the other end of said pair of drive-mode springs is connected to the first shuttle-mass.

The second suspension structure may be constructed in a similar way. That is, the sense-mode spring of said second suspension structure is connected between the anchor structure and one end of said pair of third and fourth drive-mode springs of said second suspension structure, wherein the other end of said pair of drive-mode springs is connected to the second shuttle-mass.

In the preferred embodiment, the sense-mode springs in the suspension structure and the sense-mode spring between the shuttle-mass and the proof-mass represent two separate structural elements for separately adjusting the in-phase/anti-phase frequency of the sense-mode.

According to a particular embodiment of the invention the anchor structure comprises a second anchor post. The first suspension structure comprises a drive-mode spring connecting the first shuttle-mass to the second anchor post. That means, that in the area of the second anchor post the shuttle-mass cannot perform a relevant movement in sense-mode direction. As a matter of fact, a tilting in-plane movement of the shuttle-mass is possible.

An advantage of the MEMS device using such a suspension is that the drive-mode is not disturbed by the sense-mode.

In a particular embodiment of the invention each of the suspension structures is symmetric with respect to the drive-mode direction (x-axis). The symmetry avoids parasitic movements and defines the movements along x and y axes properly. This improves the mode-separation.

In a preferred embodiment the drive-mode springs which are connecting the drive shuttle to the intermediate area are elastic beams extending in sense-mode direction (y). A beam element that is flexible in the direction that is transverse to the longitudinal axis of the beam element is a simple and efficient way to Implement a drive-mode spring. The ratio between the width and the length of the beam defines its flexibility. If the length is held fixed, the flexibility may be modified by only changing the width of the beam.

Preferably the second and fourth drive-mode spring of the first and second suspension structures are each formed by two parallel elastic beams extending in sense-mode direction (y) and being connected at one of their ends. Each of said springs, therefore, is of the type of a folded beam. So, if there is just a limited space available for accommodating the drive-mode spring, the flexibility can be improved by providing a beam-type element that is folded twice or several times.

Sense-mode springs:

A preferred embodiment is characterized in that the sense-mode spring of each suspension structure comprises two parallel beams extending in drive-mode direction (x). One end of the two parallel beams may be connected to the intermediate area between the first and second drive-mode spring. The other ends may be attached to an anchor structure. In particular, the other ends may be attached to two separate posts of the anchor structure.

Alternatively, a sense-mode spring may have the form of a single beam, multiple beams or of a folded beam.

According to a particular embodiment the anchor structure of the shuttle-mass comprises a pair of adjacent anchor posts. The distance between said posts is preferably smaller than the maximum dimension of one of the anchor posts parallel to the substrate plane. Using several anchor posts increases the stability of the vibratory structure. It is, however, also possible to attach the suspension to an anchor frame.

Rectangular shape:

In a special embodiment of the invention both vibratory structures have a rectangular perimeter. The vibratory structures are arranged side by side so that the needed chip-area is minimal. The shape of one or both of the vibratory structures may also be circular.

All anchor posts may be arranged inside the area which is surrounded by the perimeter of the vibratory structures. That is, the anchor posts that are provided for anchoring the first vibratory structure are all within the perimeter of said first vibratory structure. And vice versa for the second vibratory structure: That is, the anchor posts that are provided for anchoring the second vibratory structure are all within the perimeter of said second vibratory structure.

Proof-mass inside shuttle-mass:

In a particular embodiment the proof-mass is arranged within the perimeter of the shuttle-mass. For instance, the shuttle-mass has the shape of a frame and the proof-mass is arranged in an opening of the shuttle-mass frame. The frame may be a closed rectangular ring. The shuttle-mass frame may also have two or more openings. For instance, there may be two openings for the drive electrodes. Further more, there may be openings for the anchor structure.

Alternatively, the proof-mass may be arranged outside of the shuttle-mass. Such a geometric design may be achieved by a C-shaped proof-mass and a shuttle-mass that extends into the opening of the C-shaped proof-mass. The shuttle-masses may be arranged side by side and the proof-masses may be arranged laterally outside the pair of shuttle-masses.

The proof-mass may be a full plate or a plate with openings. The openings are preferably large enough so that the electrostatic means for sense-mode motion control can be placed inside the openings. The proof-mass may, therefore, have the shape of e.g. a rectangular frame defined by at least four stiff beams rigidly connected to each other.

The basic electrodes of the MEMS device are, on the one hand, the electrodes for generating a controlled drive-mode movement and, on the other hand, the electrodes for detecting or controlling the sense-mode movement. The first mentioned electrodes cooperate with the shuttle-mass and the second mentioned electrodes with the proof-mass.

Electrodes for quadrature compensation:

In a specific embodiment there is a plurality of electrodes for quadrature error compensation. These electrodes are used to limit the cross-talk between drive and sense mode. For instance, the quadrature error correction is used to reduce or eliminate the sensitivity of the sense electrodes to drive-mode motion.

However, the quadrature error compensation electrodes may be omitted, if the suspension structure is designed in such a way that undesired cross-talk of the relevant drive and sense modes are minimal. Of course the quadrature compensation electrodes may also be omitted, if the influence of the expected quadrature error is sufficiently low.

The proof-masses are typically rectangular. The quadrature error compensation electrodes are preferably located at the four corners of each proof-mass.

Frequency tuning electrodes:

It is an option that the sense-mode frequency is tuned by frequency tuning electrodes located on each proof-mass. In this way, the imperfections of the production process can be dealt with during calibration and operation of the gyroscope. The frequency tuning electrodes cooperate with the proof-masses and have the effect of a virtual decrease of the spring constant of the sense-mode springs.

Other advantageous embodiments and combinations of features come out from the detailed description below and the totality of the claims.

**Brief description of the drawing**

The drawings used to explain the embodiments show:

Fig. 1        a schematic top plan view of a preferred embodiment of the invention for z-axis rotation detection;

Fig. 2a,b    a representation of the anti-phase drive-mode;

Fig. 3a,b    a representation of the in-phase drive-mode;

Fig. 4a,b    a representation of the anti-phase sense-mode;

Fig. 5a,b    a representation of the in-phase sense-mode;

Fig. 6a,b    a second embodiment of the suspension structure;

Fig. 7a,b          a third embodiment of the suspension structure;

Fig. 8          a fourth embodiment of the suspension structure.

In the figures, same components carry same reference symbols.

**Preferred embodiments**

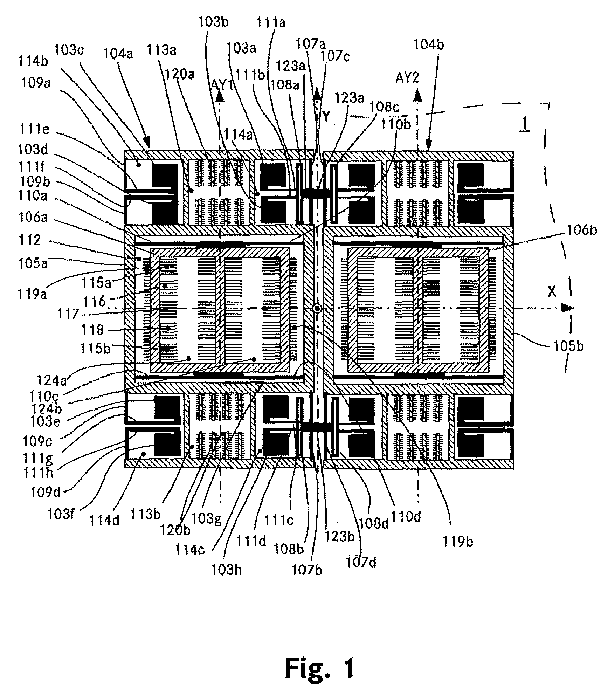

Fig. 1 shows a schematic top plan view of a preferred embodiment of the invention for z-axis rotation detection. The three-dimensional Cartesian coordinate system x-y-z is used in the description for clarity purposes. The x-axis corresponds to the drive-mode direction, the y-axis to the sense-mode direction and the z-axis to the rotation detection axis. The substrate 1 may be a chip of a silicon wafer as known in the art. The main surface of the substrate 1 defines the so called substrate plane, which is parallel to the x-y- plane. The substrate 1 is the carrier of the Micro-Electro-Mechanical-System (MEMS) device.

The sensor device for measuring the angular rate is formed on the substrate 1. The mobile parts of the sensor may be implemented in a SOI (Semiconductor On Insulator) structure that is mounted on the silicon wafer. In the present embodiment, the whole sensor structure (except for the sense-mode electrodes) that is built onto the substrate 1 is substantially mirror-symmetrical with respect to the y-axis and also with respect to the x-axis. (The reason why the sense-mode electrodes of the left-hand proof-mass are not mirror-symmetrical to the sense-mode electrodes of the right-hand proof-mass is that they are designed for anti-phase operation.) The following description is, therefore, limited to the left hand side of the sensor. It is to be noted, that the mobile parts shown in Fig. 1 are designed to only perform movements parallel to the substrate plane. That is, the flexible parts (springs) are relatively stiff in direction of the z-axis.

According to Fig. 1 the MEMS device comprises two vibratory structures 104a, b. Each of them is connected to an anchor structure that consists of eight anchor posts 103a-h. The anchor posts 103a-h have for example a square shape in the x-y plane and they are arranged in pairs.

The first vibratory structure 104a comprises a shuttle-mass 105a and a proof-mass 106a.

The shuttle-mass 105a has a frame-like structure and covers a substantially rectangular area, i.e. the shuttle-mass 105a has a rectangular perimeter or envelope curve. Each shuttle-mass (not including the details of the drive-mode electrodes) is in addition substantially mirror-symmetrical in x- and y-direction.

Also the proof-mass 106a has a frame-like structure and covers a substantially rectangular area, i.e. the proof-mass 106a has a rectangular perimeter or envelope curve. Each proof-mass (not including the details of the sense-mode electrodes) is in addition substantially mirror-symmetrical in x-and y-direction.

As shown in Fig. 1, the shuttle-mass 105a comprises a rectangular central proof-mass opening 112 which is defined by four stiff bars (= inner frame) of the frame-like shuttle-mass 105a. Inside the proof-mass opening 112 there is the proof-mass 106a. The shuttle-mass also comprises two drive electrode openings 113a, 113b, which are at opposite ends of the shuttle-mass 105a in y-direction. In the openings 113a, 113b there are the drive electrodes for the vibratory structure 104a.

In the four corner areas of the shuttle-mass 105a there are four anchor openings 114a-d. In each of the anchor openings 114a-d there is a pair of anchor posts 103a/b, 103c/d, 103e/f, 103g/h.

In the present embodiment, the drive electrode opening 113a is arranged (in x-direction) between two anchor openings 114a, 114b. The same geometric relation is provided for the electrode opening 113b with respect to the anchor openings 114c, 114d. While the drive electrode openings 113a, 113b are surrounded on all four sides by stiff bars (which form a closed rectangle), the anchor openings 114a-d are only defined on three sides by stiff bars (- c-shape structure) of the shuttle-mass 105a.

Inside the proof-mass opening 112 of the shuttle-mass the first proof-mass 106a is suspended by four sense-mode springs 110a-d which have in each case the design of a straight beam extending in x-direction and having flexibility In y-direction. Each straight beam is connected with one end to the rim of the proof-mass opening 112 (e.g. to the bars of the shuttle-mass which extend in y-direction) and with the other end to the outer rim of the proof-mass 106a, namely, to the rim which extends in x-direction. The beams that work as sense-mode springs 110a-d are characterized in that they are at least more flexible in y-direction than in x-direction. For instance the modulus of flexibility in y-direction is more than 10 times lower than the modulus of flexibility in x-direction.

The proof-mass 106a in the present embodiment has a rectangular shape and is mainly defined by four stiff bars. There is an internal bar in the middle of the proof-mass 106a extending in y-direction and dividing the inner space of the proof-mass 106a into two electrode openings 124a, 124b.

The anchor opening 114a of the shuttle-mass 105a is defined on three sides by three stiff bars in the manner of a c-shape stiff structure. The fourth side (i.e. the open side of the c-shape) is defined by a first drive-mode spring 107a. In the present embodiment, the drive-mode spring 107a is a beam or chord that extends in y-direction and that is flexible in x-direction and that is connected with both of its ends to the rim of the anchor opening 114a of the shuttle-mass 105a. Inside the anchor opening 114a there is a second drive-mode spring 108a. In the present embodiment, it has the structure of two parallel beams that extend in y-direction and that are connected at their ends to each other. The shape of said spring structure equals a flat rectangle that is several times longer than wide.

According to the invention, the first drive-mode spring 107a is connected to the second drive-mode spring 108a so that these two springs can work like a serial arrangement of springs. In the present embodiment, the central part of the beam-shaped first drive-mode spring 107a is rigidly connected to the central part of the first one of the two parallel beams of the second drive-mode spring 108a. The connection element 123a, which rigidly couples the central part of the beam-shaped first drive-mode spring 107 to the central part of the second drive-mode spring 108a, keeps the two springs at a (small) distance from each other.

It is to be noted, that the connection element 123a is placed at an intermediate area of the suspension structure, namely, between the first and second drive-mode springs 107a, 108a. And the connection element 123a obviously provides a connection to the intermediate area between the third and fourth drive-mode spring 107c, 108c of the second suspension structure.

The second drive-mode spring 108a is connected to the first anchor post 103a by a sense-mode spring 111 a and in addition to the second anchor post 103b by a similar sense-mode spring 111 b. The two sense-mode springs 111 a, 111 b may be straight beams that are oriented in x-direction and that are flexible in y-direction. In each case, the first of their ends is connected to a central part of second one of the two parallel beams of the second drive-mode spring 108a and the second of their ends is attached to a corner of the anchor post 103a, 103b. In the present embodiment, the anchor posts 103a, 103b are spaced apart from each other and the sense-mode spring 111 a, 111b extends through the space between the anchor posts 103a, b.

According to the invention, the first drive-mode spring 107a of the first vibratory structure 104a is connected to a corresponding first drive-mode spring 107c of the second vibratory structure 104b. The connection may be implemented by a block-type coupling element 123a. A similar coupling element 123b connects the drive-mode springs 107b, 107d, so as to couple the two vibratory structures 104a, 104b at two points.

In the electrode openings 124a, 124b of the proof-mass 106a, the sense-mode electrodes 115a, 115b, 116, 117 and 118 are attached to those bars of the frame-like proof-mass 106a which extend in y-direction. Each of the sense-mode electrodes 115a, 115b, 116, 117 and 118 comprises a plurality of fingers, which are oriented in x-direction and which are arranged in an interleaving manner with stationary electrode fingers (not shown). The sense-mode electrode structure is designed to detect in-plane y-direction movements.

There are different groups of sense electrodes. The first group of sense-mode electrodes 115a, 115b is for sense-mode frequency tuning and is placed at an outermost place (with respect to y-direction) within the electrode opening 124a, 124b. There are sense-mode electrodes 116 for positive sense actuation, which are adjacent to the sense-mode electrodes 115a. Adjacent to the sense-mode electrodes 116, there are sense-mode electrodes 117 for positive sense detection. And there are sense-mode electrodes 118 for negative sense actuation and they are placed between the sense-mode electrodes 117 for positive sense detection and the sense-mode electrodes 115b for sense-mode frequency tuning.

At the outside rim of the proof-mass 106a there are quadrature compensation electrodes 119a, 119b. They comprise electrode fingers extending in x-direction. The quadrature compensation electrodes stabilize the proof-mass against an undesired cross-talk of the modes.

In the drive electrode openings 113a, 113b of the shuttle-mass 105a, there are several bars of the shuttle-mass structure extending in y-direction. The drive electrodes 120a, 120b comprise drive electrode fingers that are attached to said bars and that extend in x-direction.

According to well known principles, the finger electrodes shown in the drawings are interdigitated with corresponding electrodes of the substrate (not shown), in such a way that an electrostatic device is formed. Only for the sake of simplicity the fixed parts of the electrostatic devices have not been depicted in the drawings.

In the present embodiment, the suspension structure of the first vibratory structure 104a is defined by the flexible structural elements that connect the stiff shuttle-mass frame to the anchor posts (= anchor structure). Therefore, the sense-mode springs 111a, 111b, the drive-mode springs 108a, the coupling element 123a and the drive-mode spring 107a is a first group of elements of the suspension structure. A second group of elements is defined by the sense-mode springs 111c, 111d, the drive-mode spring 108b, the coupling element 123b and the drive-mode spring 107b. These two groups of elements are arranged at the side of the first vibratory structure facing the second vibratory structure (which may be called the "inside end" of the vibratory structure).

The suspension structure also comprises third and fourth groups of elements that are at the outside end (that is: opposite to the inside end) of the vibratory structure. In the present embodiment these two groups are mirror symmetrically arranged with respect to the x-axis. To be more specific:

The third group is defined by the two drive-mode springs 109a, 109b which are provided between the stiff beams 111e, 111f and the outside end (corners) of the anchor opening 114b. Each of the stiff beams 111e, 111f is attached to one anchor post 103c, 103e and extends in x-direction, The drive-mode springs 109a, 109b are two beams that are attached to the outside end of the shuttle frame and that extend in y-direction. They limit the anchor opening 114b at the outside end of the shuttle-mass.

The fourth group of elements of the suspension structure is defined by the drive-mode springs 109c, 109d. They are connected on the one hand to the shuttle-mass and on the other hand to the stiff beams 111g, 111h that are attached to the anchor structure, i.e. the anchor posts 103e, 103f.

It is evident from Fig. 1 that only the drive shuttle 104a is anchored to the substrate 1. The proof-mass 106a has no direct connection to the anchor structure but is only connected to the shuttle-mass 104a. This is a difference to the prior art structures in which the proof-masses are directly suspended on the anchor structure.

It is to be noted, how the first and second vibratory structures are elastically coupled to each other in order to form a tuning-fork-type sensing device. The first group of elements (107a, 108a, 111a, 111b, 123a) of the first suspension structure (of vibratory structure 104a) is connected to a corresponding first group of elements (see springs 107c, 108c) of the second suspension structure of vibratory structure 104b.

From a different point of view, the two shuttle-masses 105a, 105b are elastically coupled to each other by two drive-mode springs 107a, 107c. The coupling element 123a is so to speak an intermediate point of the two drive-mode springs 107a, 107c. Said intermediate point is coupled to two anchor structures, namely to the pair of anchor posts 103a, 103b of the first vibratory structure 104a and to the corresponding pair of anchor posts of the second vibratory structure 104b.

It is evident from the above description that the embodiment of Fig. 1 uses the combination of (a) one-dimensional springs for controlling in-phase and anti-phase drive-mode frequencies and (b) one-dimensional springs for controlling in-phase and anti-phase sense-mode frequencies.

Operation:

The sensing elements in combination with the electronic drive and control means (not shown) form a Coriolis vibratory gyro sensitive to z-axis angular rate,

The two vibratory structures 104a, 104b are driven to vibrate in x-direction (drive direction) by the drive electrodes 120a, 120b. The desired oscillation mode of the vibratory structures is the anti-phase mode (corresponding to a tuning fork type sensor). Due to the fact that the sense-mode springs 110a-d are substantially stiff in x-direction, the proof-mass 106a vibrates synchronously with the shuttle-mass 105a in x-direction. So, the two vibratory structures 104a, 104b correspond to the two tines of a tuning fork.

Each vibratory structure 104a, 104b is able to oscillate in two orthogonal directions, namely in drive direction (x-axis) and in sense direction (y-axis). This is due to the suspension structure. It is to be noted that the suspension structure shown in Fig. 1 is substantially stiff in z-direction and, therefore, blocks out-of-plane movements of the vibratory structures 104a, 104b.

When an angular rate is applied to the MEMS device along the z-axis, a Coriolis acceleration appears on the proof-masses 106a, 106b leading to their vibration along the y-axis (sense-mode direction).

The anti-phase operation of the two tines of the tuning fork in drive and sense-mode leads to a mechanical differential operation rejecting the mechanical common mode which is sensitive to linear acceleration and temperature variation. The anti-phase operation is achieved by the particular coupling structure of the invention.

According to the invention, the drive motion is decoupled from the proof-mass motion, which makes the drive motion insensitive to the sense motion.

The dynamic coupling of the two vibratory structures via the suspension structure (springs 107a, 107c and coupling element 123a) ensures the anti-phase operation by rejecting the in-phase modes ("hula modes"). The in-phase modes are shifted towards lower frequencies. As shown in Fig. 1, the coupling structure is composed of two identical parts, which connect the drive shuttles (shuttle-mass) at the two extremities of the y-axis of symmetry.

The coupling of the two vibratory structures is a 2 DOF (2 degree of freedom) part; each DOF is related with the rejection of one "hula mode", one for the in-phase drive-mode and the other one for the in-phase sense-mode.

The resilience of the drive-mode springs and of the sense-mode springs (coupling springs) defines the frequency window between the anti-phase and the in-phase modes. This window should be sufficiently large. It is preferably 10% of the drive-mode frequency.

For instance, it is to be noted that the production process has limited capabilities (etching precision, dispersion of precision from die to die and from wafer to wafer) and this influences the accuracy and reproducibility of the geometry of the masses and springs. This in turn leads to a dispersion of frequency values of the MEMS device.

The spring characteristics are finally tuned to ensure a frequency window of e.g. at least 10% of the drive mode frequency between the anti-phase and in-phase modes.

Consider first the in-phase and anti-phase drive motion that is the motion occurring along the x-axis.

There is an in-phase drive motion, when the vibratory structures 104a, 104b both move at the same time in positive direction and in negative direction of the x-axis. In that motion, the drive-mode springs 107a and 108a are active in the manner of a series of two springs. The modulus of resilience C(107a + 108a) of the series of the springs 107a, 108a is calculated from the individual moduli of resilience C(107a) and C(108a) according to the well-known formula:

$$\frac{1}{C(107a+108a)} = \frac{1}{C(107a)} + \frac{1}{C(108a)}$$

Since the vibratory structure 104a is suspended by two series of drive-mode springs 107a+108a and 107b+108b and by four single drive-mode springs 109a, ..., 109d, the in-phase drive-mode frequency is, therefore, defined by all of said drive-mode springs (The vibratory structure 104b is suspended in an analogous way).

Consider now the anti-phase drive motion, when the vibratory structures 104a, 104b move symmetrically with respect to the y-axis, which is the axis of symmetry of the device. To be clear, when the vibratory structure 104a moves in the positive direction of the x-axis, the vibratory structure 104 moves in the negative direction, and vice versa. In that motion, only the drive-mode spring 107a of the serial arrangement of drive-mode springs 107a and 108a is active. So, in contrast to the in-phase drive motion, the drive-mode spring 108a is not active.

Therefore, in anti-phase drive-mode the frequency of the vibratory structure 104a is defined by the drive-mode springs 107a and 107b and by four single drive-mode springs 109a-d. The anti-phase drive-mode frequency is, therefore, defined by all of said drive-mode springs and is higher than the in-phase drive-mode frequency. The same is, of course, true for vibratory structure 104b.

Consider next the in-phase and anti-phase sense motion that is the motion occurring along the y-axis.

There is an in-phase sense motion, when the proof-masses 106a, 106b both move at the same time in positive direction or in negative direction of the y-axis. In that motion, the sense-mode springs 111a-h and 110a-d are active. On one hand, the first group of sense-mode springs 110a-d defines a parallel spring arrangement between the proof-mass and the shuttle-mass 104a. On the other hand, the second group of sense-mode springs 111a- ah defines a second parallel spring arrangement between the shuttle-mass 104a and the anchor structure (anchor posts 103a-h). The first and the second group of sense-mode springs work together as a series of springs. Therefore, the in-phase sense-mode frequency is determined by the two groups of sense-mode springs 111a-h and 110a-d.

Consider now the anti-phase sense motion, when the proof-masses 106a, 106b move in opposite y-direction with respect to each other. To be clear, when the proof-mass 106a moves in the positive direction of the y-axis, the proof-mass 106b moves in the negative direction, and vice versa. Due to the rigid coupling elements 123a, 123b and due to the stiffness of the drive-mode springs 107a-d in y-direction, the two shuttle-masses 105a, 105b cannot travel in anti-phase to each other. So, they remain substantially stationary with respect to the anchor structure. Therefore, only the first group of sense-mode spring 110a-d of the serial arrangement of sense-mode spring 110a-d and 111 a-h is active. So, in contrast to the in-phase sense motion, the sense-mode springs 111a-h are not active.

Therefore, the anti-phase sense-mode frequency of the proof-masses 106a is defined by the sense-mode springs 110a-d. The anti-phase sense-mode frequency is, therefore, higher than the in-phase sense-mode frequency. The same is, of course, true for proof-mass 106b.

The above explanation of the operation makes clear, that the device of the invention has separate structural elements for separately adjusting the in-phase/anti-phase frequency separation of the sense-mode. The sense-mode springs 110a, 110b on one hand and the sense-mode springs 111 a, 111b are separate structural elements. Because the sense-mode springs 111 a, 111b are not active during anti-phase sense-mode operation they only influence the in-phase sense-mode. Therefore, a modification of the modulus of resilience of the sense-mode springs 111a, 111b changes the in-phase and anti-phase separation of the sense-mode. The anti-phase sense-mode frequency is primarily defined by the springs 110a-d.

In an analogous way the frequency of the anti-phase drive-mode is defined by particular structural elements, namely by springs 107a-d, that are different from the structural elements (namely the pair of springs 107a+108a, 107b+108b) that define the anti-phase drive-mode frequency.

Electrostatic means on the shuttle-masses are used to drive and control the drive oscillations, electrostatic means on the proof-masses are used to control and force-feedback its oscillations. The quadrature error is cancelled using the electrodes located at the four corners of each proof-mass. The stiffness of the sense-mode is tuned by frequency tuning electrodes 115a, 115b located on each proof-mass.

In a sensor device according to Fig. 1 the (undesired) in-phase modes is for instance about 10% away from the anti-phase modes (tuning fork mode). The first out-of-plane parasitic mode starts about 15% above the highest tuning fork mode, providing comfortable margins around the operating point of the rotation rate gyro.

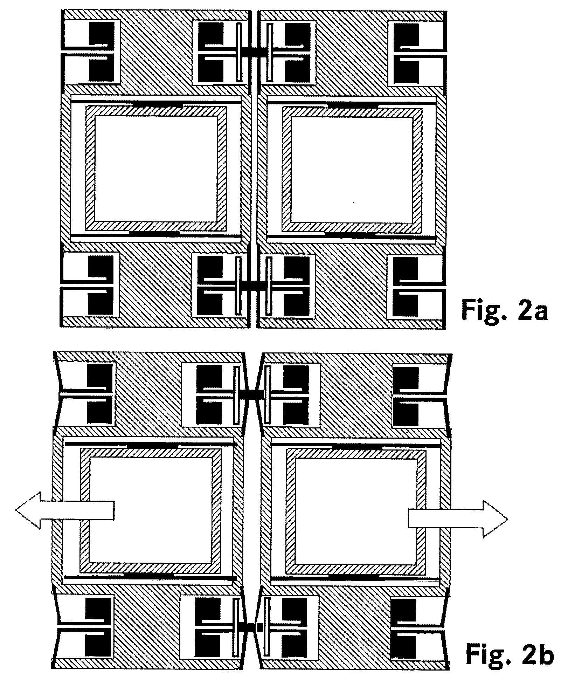

Fig. 2a,b illustrate the anti-phase drive-mode. Fig. 2a shows the still position. In Fig. 2b the two vibratory structures are moving in x-direction away from each other. It is evident that only the drive-mode springs 107a-d and 109a-d are active. So, despite of the fact that the drive-mode springs 107a/108a, 107b/108b, 107c/108c and 107d/108d are arranged pairwise in series, they do not work in series in anti-phase drive-mode. Due to the particular type of mechanical coupling of the suspension structures of the two vibratory structures, the drive-mode springs 108a-d are inactive.

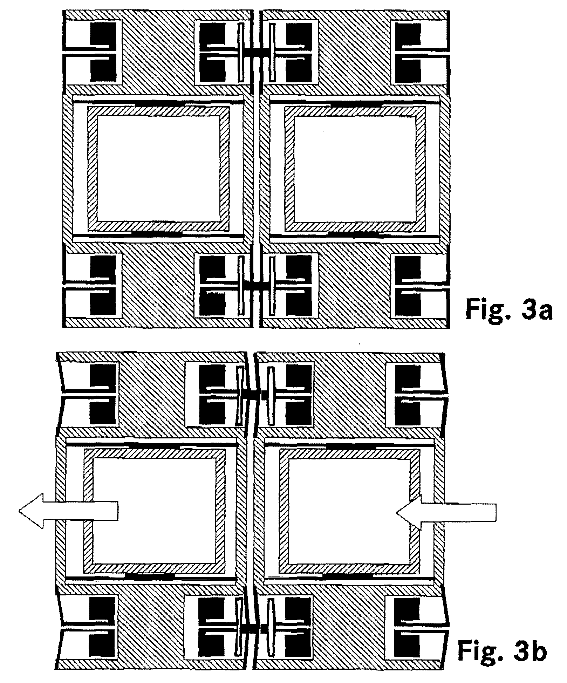

Fig. 3a,b illustrates the in-phase drive-mode. While Fig. 3a shows the still position, Fig. 3b demonstrates the in-phase drive movement. In this movement, the drive-mode springs 108a-d are active in addition to the drive-modes springs 107a-d and 109a-d. So, in each pair of drive-mode springs 107a/108a, 107b/108b, 107c/108c and 107d/108d the two drive-mode springs work in series.

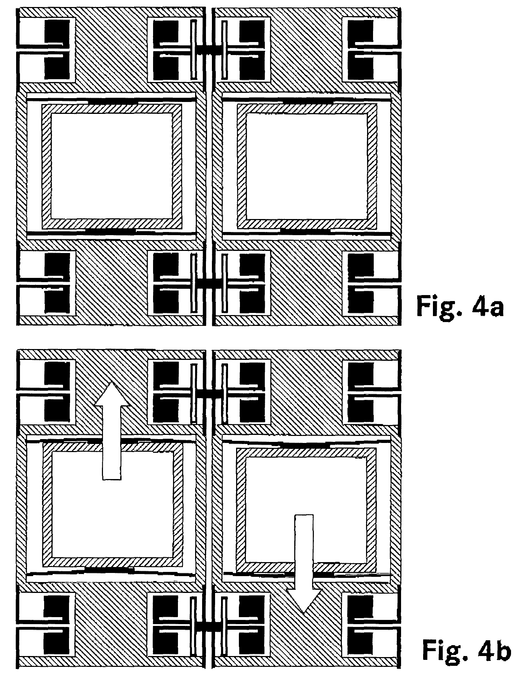

Fig. 4a,b illustrate the anti-phase sense-mode. While Fig. 4a shows the still position, Fig. 4b demonstrates the anti-phase sense-mode movement. In this movement, the sense-mode springs 110a-d are active, while the sense-mode springs 111a-d are inactive. It is evident from Fig. 4b that the stiff coupling elements 123a,b suppress an anti-phase movement of the shuttle-masses 105a,b. So, in each pair of sense-mode springs 111a/111b and 110a/110b on the one hand, and 111c/111d and 110c/110d on the other hand, only one spring 110a,b and 110c,d, respectively, is active.

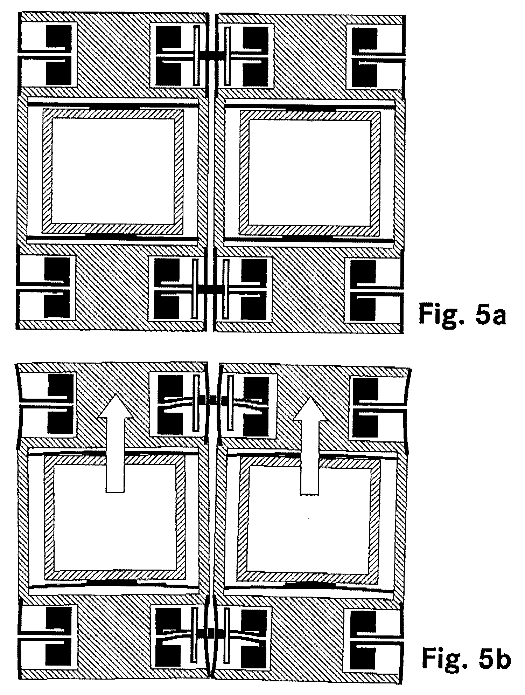

Fig. 5a,b illustrate the in-phase sense-mode. While Fig. 5a shows the still position, Fig. 5b demonstrates the in-phase sense-mode movement. In this movement not only the sense-mode springs 110a-d are active but also the sense-mode springs 111a-d. It is evident from Fig. 5b that the (undesired) in-phase sense mode leads to a slight rotational movement about an axis normal to the substrate plane. So, in each pair of sense-mode springs "110a,b + 111a,b" on the one hand, and "110c,d + 111c,d" on the other hand, both parts are active.

It is now clear, that (for a given mass of the vibratory structure 104a) the frequency of the anti-phase drive mode is defined by the drive-mode springs 107a,c and 109a,b,c,d. And the frequency of the in-phase drive-mode is determined by the drive-mode springs 107a,c and 109a,b,c,d and 108a,b. It is to be pointed out, that the drive-mode springs 108a,b define the separation between the anti-phase drive-mode and the in-phase drive-mode. A modification of the flexibility of the springs 108a,b ("frequency separation springs") only changes the separation of the in-phase/anti-phase frequencies but it does not change the anti-phase of the drive mode. Therefore, the drive-mode springs 108a,b represent structural elements that are separate from the structural elements for defining the anti-phase drive-mode, namely separate elements from the springs 107a,b, 109a-d.

The situation for the sense-mode is similar: There are separate structural elements for defining the anti-phase sense-mode frequency, on the one hand, and for defining the in-phase/anti-phase frequency separation, on the other hand. The anti-phase sense-mode frequency is defined (for a given proof-mass) by the sense-mode springs 110a-d. The in-phase sense-mode frequency is defined (for a given mass of the vibratory structure 104a) by the springs 110a-d and 111a-d. Therefore, the in-phase/anti-phase frequency separation can be controlled by the sense-mode springs 111a-d. A change of the flexibility of the sense-mode springs 111a-d does not influence the anti-phase sense-mode frequency. So the structural elements for defining the anti-phase sense-mode frequency are separate from the structural elements for defining the in-phase/anti-phase sense mode frequency separation.

The MEMS device may be operated in open loop or in closed loop control. In open loop operation the sense-mode movement is freely running, while in closed-loop operation the sense-mode movement is compensated by an electric signal injected into the sense-mode electrodes for generating electrostatic forces compensating the Coriolis movement.

The invention is not limited to the design shown in Fig. 1. Other designs are also possible. In a modification of Fig. 1 the stiff bars 111 e-h may be replaced by sense-mode springs e.g. flexible beams extending in x-direction and not being flexible transverse to the x-direction.

The electrodes 115a, 115b, 116, 117, 118 may alternatively be arranged at the outside rim of the proof-mass 106a instead of inside the electrode opening of the proof-mass. An additional variant may be that the drive electrodes 102a, 120b are arranged at the outside fim of the shuttle-mass instead of inside the drive electrode opening 113a, b of the shuttle-mass.

Instead of providing four pairs of anchor posts there may be four single anchor posts. The anchor posts may be placed outside the periphery (i.e. outside the perimeter line) of the shuttle-mass. If the anchors 103c-f are placed outside of the periphery of the vibratory structure, they may be replaced by one long anchor element extending alongside to the vibratory mass in y-direction. The length of the anchor may correspond to the distance between the anchor posts 103c and 103f. Such a MEMS design, therefore, has only three anchors per vibratory structure.

It is also possible to use a different arrangement of springs.

According to a variation of the embodiment shown in Fig. 1, the stiff beams 111e-g are replaced by flexible beams that represent sense-mode springs. According to a further variation of Fig. 1 the two drive-mode springs 109a, 109b, each of which connects the shuttle-mass 105a directly to the supporting structure (anchor 103c, stiff beam 111e / anchor 103d, stiff beam 111f) may be replaced by one flexible beam extending in sense-mode direction.

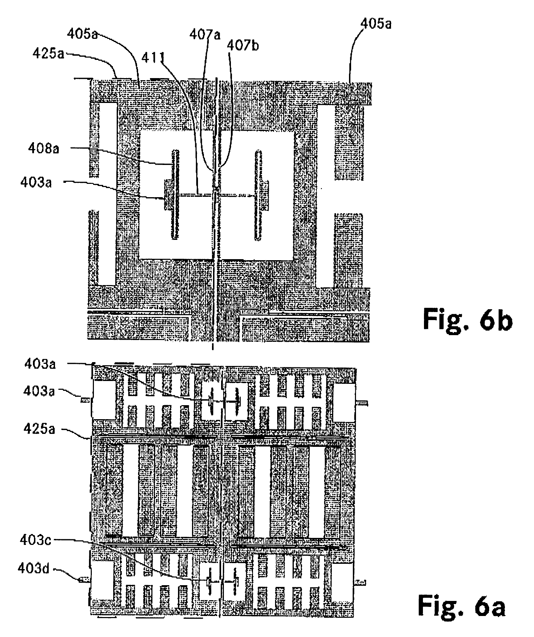

Fig. 6a,b show a suspension structure that is different from Fig. 1. The drive-mode springs 407a functionally corresponds to the drive-mode spring 107a and the drive-mode spring 408a functionally corresponds to the drive-mode spring 108a. And the single sense-mode spring 411 functionally corresponds to the pair of sense-mode springs 111a, b. In Fig. 6a,b, the drive-mode springs 407a, 408a are still working as a series of springs. However, they are not directly connected to each other (i.e. by a stiff element), Rather more, the sense-mode spring 411a is in between the drive-mode springs 407a and 408a. The central part of the sense-mode spring 407a of the suspension structure of the first shuttle-mass 405a is rigidly connected the central part of the sense-mode spring 407b of the suspension structure of the second shuttle-mass 405b.

Fig. 6a also illustrates a variant according to which the anchor posts 403b 403d are not within the perimeter line 425a of the shuttle-mass 405a (i.e. not within an anchor opening of the shuttle-mass) but outside the perimeter line of the shuttle-mass 405a. So there is no need for an anchor opening for the anchor structure at the outer end of the shuttle-mass.

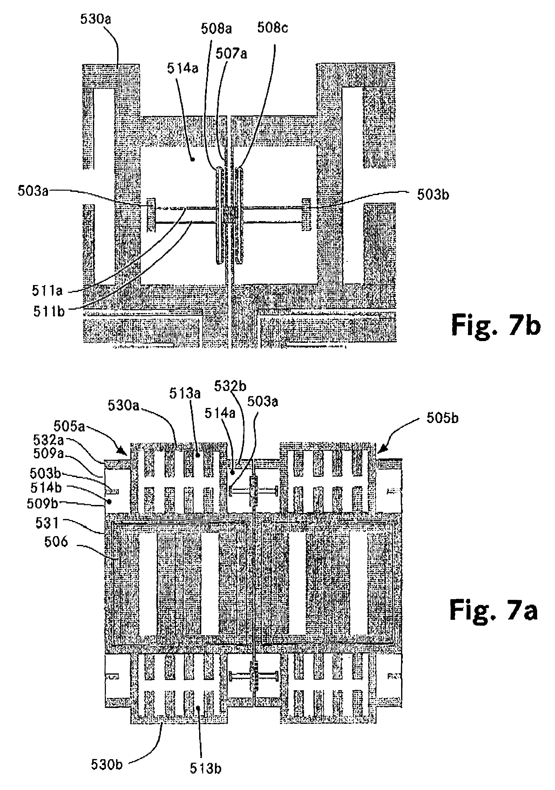

Fig. 7a,b shows a shuttle-mass that does not have a strictly rectangular periphery. Because the shuttle-masses 505a,b are symmetrical the following description only refers to one of them.

In the present embodiment, the shuttle-mass 505a comprises a central rectangular frame 531 with an opening for the proof-mass 506 and two lateral rectangular drive electrode frames 530a,b with a drive electrode opening 513a,b. The drive electrodes in the drive electrode opening 513a,b may be designed in a similar way as the drive electrodes 120a,b shown in Fig. 1.

Further more, the shuttle-mass 505a comprises bars 532a,b, that are attached to the drive electrode frame 530a and that extend in -x- and +x-direction so as to define an anchor opening 514a,b of the shuttle frame in an external corner area between the drive electrode frame 530a and the central frame 531. The anchor openings 514a,b serve for accommodating the anchor posts 503a, 503b. In the present embodiment, the single anchor post 503a functionally corresponds to the pair of anchor posts 103a,b of Fig. 1. The drive-mode spring 509a, 509b functionally correspond to the drive-mode springs 109a, 109b of Fig. 1 and they flexibly connect the shuttle-mass 505a to the anchor post 503b.

In the anchor opening 514a there is a single anchor post 503a. Two parallel flexible beams 511a, 511b extending in x-direction are used for connecting the sense-mode spring 508a to the anchor post 503a. On the other side, the sense-mode spring 508a is connected to another sense-mode spring 507a, which in turn is connected to the shuttle-mass 505a. It is evident, that the two parallel flexible beams 511 a,b functionally correspond to the sense-mode springs 111 a,b of Fig. 1. And the drive-mode springs 508a and 507a functionally correspond to the drive-mode springs 108a and 107a, respectively.

In a modification of the suspension structure of Fig. 7a,b the two parallel beams 511 a,b may be replaced by one single flexible beam.

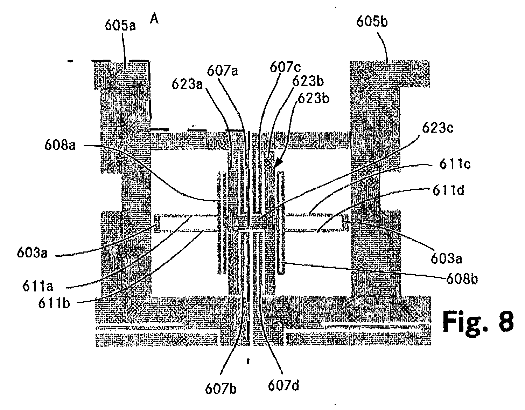

Fig. 8 shows another embodiment of the invention. The shuttle-masses 605a,b may have the same geometric shape as shown n Fig. 7a. In contrast to the embodiment of Fig. 7a,b, the drive-mode springs 607a-d are not straight beams but folded beams. Preferably, they comprise two parallel elongate straight beam sections and one short beam section connecting the two parallel elongate straight beam sections at one end so as to define a narrow U-shape. The coupling element 623 is H-shaped and comprises two stiff bars 623a, 623b, which extend in y-direction, and one transverse bar 623c, which extends in x-direction and connects the two bars 623a, 623b at their central part. The drive-mode springs 607a, 607b are connected to the ends of the stiff bars 623a, 623b.

The drive-mode springs 608a, 608b are folded beams that are attached with their first end to the central part of the coupling element 623 and with their second end to the sense-mode springs 611a-d. The sense-mode springs 611a-d are attached to the anchor posts 603a, 603b, which are arranged within the area defined by the perimeter line of the respective shuttle-mass 605a, 605b. (In Fig. 8 a part of the perimeter line 625 of shuttle-mass 605a is indicated by a dashed line.)

In summary, the invention provides for a sensor design that is amenable to an easy control of the frequency of the in-phase/anti-phase modes in sense and drive direction.

## Claims

1. A micromechanical sensor device for measuring z-axis angular rate comprising:

   a) a substrate (1) defining a substrate plane and a z-axis perpendicular to the substrate plane,
   b) a first vibratory structure (104a) comprising a first shuttle-mass (105a) and a first proof-mass (106a), the first proof-mass (106a) being coupled to the first shuttle-mass (105a) by at least a first sense-mode spring (110a-d),
   c) a second vibratory structure (104b) comprising a second shuttle-mass (105b) and a second proof-mass (106b), the second proof-mass (106b) being coupled to the second shuttle-mass (105b) by at least a second sense-mode spring,
   d) a first suspension structure for suspending the first shuttle-mass (105a) above the substrate (1) flexibly in drive-mode direction (x),
   e) a second suspension structure for suspending the second shuttle-mass (105b) above the substrate (1) flexibly in drive-mode direction (x),
   f) the first and second shuttle-masses (105a, 105b) being suspended above the substrate for movement at least in drive-mode direction (x), wherein drive-mode direction and sense-mode direction are parallel to the substrate plane,
   g) the first and second vibratory structures (104a, 104b) being elastically coupled to each other,
   h) a first and a second drive electrode structure (120a) for the first and second shuttle-mass, respectively, for generating drive-mode movements of said shuttle-masses (105a, 105b) in drive-mode direction,
   i) a first and a second sensing electrode structure (115a, 115b, 116, 117, 118) for the first and second proof-mass (106a), respectively, for detecting and/or activating sense-mode movements of said proof-masses (106a) in sense-mode direction,

**characterized in that**

j) the device has separate structural elements (110a-d, 111 a-h) for separately defining first the anti-phase frequency and then the in-phase/anti-phase frequency separation of the sense-mode.

2. A micromechanical sensor device according to claim 1, **characterized in that** it has separate structural elements (107a-d, 109a-d; 108a-d) for separately defining the following pair of frequencies: the anti-phase frequency and the in-phase/anti-phase frequency separation of the drive-mode.

3. A micromechanical sensor device according to claim 1 or 2, **characterized in that** the structural elements for separately defining the in-phase and the anti-phase frequency of the drive-mode and/or of the sense mode comprise one-dimensional springs (107a-d, 108a-d, 110a-d, 111 a-h).

4. A micromechanical sensor according to any one of claims 1 to 3, **characterized in that**

a) the first suspension structure comprises a pair of first and a second drive-mode springs arranged in series,

b) the second suspension structure comprises a pair of third and a fourth drive-mode springs arranged in series,

c) a connection structure (123a, 123b) connects an intermediate area between the first and second drive-mode spring of the first suspension structure with an intermediate area between the third and fourth drive-mode spring of the second suspension structure.

5. A micromechanical sensor according to any one of claims 1 to 4 **characterized in that**

a) the first and second shuttle-masses are suspended above the substrate also for movement in sense-mode direction (y),

b) the coupling of the shuttle-masses is such that a anti-phase movement of the shuttle-masses in sense-mode direction (y) is suppressed.

6. A micromechanical sensor device according to any of claims 1 to 5, **characterized in that** both suspension structures comprise a sense-mode spring (111a-d, 111e-h).

7. A micromechanical sensor device according to any of claims 4 to 6 **characterized in that** it comprises an anchor structure comprising a first anchor post (103a,b,g,h) fixed to the substrate and **in that** the sense-mode spring (111a-b) of the first suspension structure is connected between the first anchor post (103a,b,g,h) and one end of said pair of first and second drive-mode springs (107a, 108a) of said first suspension structure, wherein the other end of said pair of drive-mode springs is connected to the first shuttle-mass (105a).

8. A micromechanical sensor device according to claim 7, **characterized in that** the anchor structure comprises a second anchor post (103c-f) and **in that** the first suspension structure comprises a drive-mode spring (109a-e) connecting the first shuttle-mass (105a) to the second anchor post (103c-f).

9. A micromechanical sensor device according to any of the claims 1 to 8, **characterized in that** each of said suspension structures is symmetric with respect to a central axis in drive-mode direction (x).

10. A micromechanical sensor device according to any of the claims 4 to 9 **characterized in that** the drive-mode springs (107a-d, 108a-d) which are connecting the drive shuttle to the intermediate area are elastic beams extending in sense-mode direction (y).

11. A micromechanical sensor device according to any of the claims 4 to 10, **characterized in that** the second and fourth drive-mode springs of the first and second suspension structures are each formed by two parallel elastic beams extending in sense-mode direction (y) and being connected at one of their ends.

12. A micromechanical sensor device according to any of the claims 4 to 11, **characterized in that** the sense-mode spring of each suspension structure comprises two parallel beams (111a, 111 b) extending in drive-mode direction (x).

13. A micromechanical sensor device according to any of the claims 7 to 12, **characterized in that** the anchor structure of the shuttle-mass comprises at lease one pair of adjacent anchor posts (103a/103b).

14. A micromechanical sensor device according to any of the claims 7 to 13, **characterized in that** both vibratory structures have a rectangular perimeter and all anchor posts (103a-h) are arranged inside the area which is surrounded by the rectangular perimeters of the first vibratory structure and the second vibratory structure, respectively.

15. A micromechanical sensor device according to any of the claims 1 to 14, **characterized in that** the first and second proof-mass (106a) is arranged within an opening (112) of the first and second shuttle-mass (105a), respectively.

**16.** A micromechanical sensor device according to any of the claims 1 to 15, **characterized in that** it comprises electrodes for quadrature error compensation.

**Patentansprüche**

**1.** Eine mikromechanische Sensoreinrichtung zur Messung der z-Achsen-Winkelgeschwindigkeit, umfassend:

a) ein Substrat (1), das eine Substratebene und eine Z-Achse senkrecht zur Substratebene definiert;
b) eine erste Schwingungsstruktur (104a), umfassend eine erste Shuttle-Masse (105a) und eine erste Korrekturmasse (106a), die erste Korrekturmasse (106a) ist über mindestens eine erste Sense-Modus-Feder (110a-d) an die erste Shuttle-Masse (105a) gekoppelt,
c) eine zweite Schwingungsstruktur (104b), umfassend eine zweite Shuttle-Masse (105b) und eine zweite Korrekturmasse (106b), die zweite Korrekturmasse (106b) ist über mindestens eine zweite Antriebsmodus-Feder an die zweite Shuttle-Masse (105b) gekoppelt.
d) Eine erste Aufhängungsstruktur, um die erste Shuttle-Masse (105a) über dem Substrat (1) aufzuhängen, biegsam in Antriebsrichtung (x).
e) Eine zweite Aufhängungsstruktur, um die zweite Shuttle-Masse (105b) über dem Substrat (1) aufzuhängen, biegsam in Antriebsrichtung (x).
f) die erste und die zweite Shuttle-Masse (105a, 105b) sind über dem Substrat aufgehängt, so dass sie sich zumindest in Antriebsmodus-Richtung (x) bewegen können, wobei Antriebsmodus-Richtung und Sense-Modus Richtung zur Substratebene parallel sind.
g) Die erste und zweite Schwingungsstruktur (104a, 104b) sind miteinander elastisch verbunden.
h) eine erste und eine zweite Antriebselektrodenstruktur (120a) für jeweils die erste und zweite Shuttle-Masse zur Erzeugung von Antriebsmodusbewegungen der genannten Shuttle-Massen (105a, 105b) in Antriebsmodusrichtung.
i) eine erste und zweite Messelektrodenstruktur (115a, 115b, 116, 117, 118) für jeweils die erste und zweite Korrekturmasse (106a), zur Erkennung und/oder Aktivierung von Sense-Modus-Bewegungen der genannten Korrekturmassen (106a) in Sense-Modus-Richtung.
j) Die Vorrichtung weist getrennte Strukturelemente (110a-d, 111a-h) auf, um getrennt zu definieren: zuerst die gegenphasige Schwingung und dann die gleichphasige / gegenphasige Schwingungstrennung des Antriebsmodus, die gegenphasige Schwingung und die phasengleiche / gegenphasige Schwingungstrennung des Antriebsmodus

**2.** Eine mikromechanische Sensoreinrichtung gemäß Anspruch 1, **dadurch gekennzeichnet, dass** sie getrennte Strukturelemente (107a-d, 109a-d, 108a-d) aufweist, um getrennt das folgende Schwingungspaar zu definieren: die gegenphasige Schwingung und dann die gleichphasige / gegenphasige Schwingungstrennung des Antriebsmodus,

**3.** Eine mikromechanische Sensoreinrichtung gemäß Anspruch 1 oder 2, **dadurch gekennzeichnet, dass** die Strukturelemente zur getrennten Definition der gleichphasigen und der gegenphasigen Schwingung des Antriebsmodus und/oder des Sense-Modus eindimensionale Federn (107a-d, 108a-d, 110a-h, 111a-h) enthalten.

**4.** Eine mikromechanische Sensoreinrichtung gemäß irgendeinem der Ansprüche 1 bis 3, **dadurch gekennzeichnet, dass**

a) die erste Aufhängungsstruktur ein Paar erste und zweite Antriebsmodus-Federn enthält, die in Serie angeordnet sind,
b) die zweite Aufhängungsstruktur ein Paar dritte und vierte Antriebsmodus-Federn enthält, die in Serie angeordnet sind,
c) eine Verbindungsstruktur (123a, 123b) einen Zwischenbereich zwischen der ersten und zweiten Antriebsmodus-Feder der ersten Aufhängungsstruktur mit einem Zwischenbereich zwischen der dritten und vierten Antriebsmodus-Feder der zweiten Aufhängungsstruktur verbindet.

**5.** Eine mikromechanische Sensoreinrichtung gemäß irgendeinem der Ansprüche 1 bis 4, **dadurch gekennzeichnet, dass**

a) die erste und zweite die erste und zweite Shuttle-Masse über dem Substrat aufgehängt sind, auch zur Bewegung in Sense-Modus-Richtung (y),
b) die Shuttle-Massen sind in einer Art und Weise miteinander gekoppelt, dass eine gegenphasige Bewegung der Shuttle-Massen in Sense-Modus-Richtung (y) unterdrückt wird.

**6.** Eine mikromechanische Sensoreinrichtung gemäß irgendeinem der Ansprüche 1 bis 5, **dadurch gekennzeichnet, dass** beide Aufhängungsstrukturen eine Sense-Modus-Feder (111a-d, 111e-h) umfassen.

**7.** Eine mikromechanische Sensoreinrichtung gemäß irgendeinem der Ansprüche 4 bis 6, **dadurch gekennzeichnet, dass** sie eine Verankerungsstruktur enthält, die einen ersten Verankerungsstift (103a, b, g, h), befestigt am Substrat, umfasst, und dass die Sense-Modus-Feder (111a-b) der ersten Aufhängungsstruktur zwischen dem ersten und zweiten Verankerungsstift (103a, b, g, h) und einem Ende des genannten Paars erster und zweiter Antriebsmodus-Federn (107a, 108a) der genannten Aufhängungsstruktur verbunden ist, wobei das andere Ende des genannten Paars Antriebsmodus-Federn mit der ersten Shuttle-Masse (105a) verbunden ist.

**8.** Eine mikromechanische Sensoreinrichtung gemäß Anspruch 7, **dadurch gekennzeichnet, dass** die Verankerungsstruktur einen zweiten Verankerungsstift (103c-f) enthält und dass die erste Aufhängungsstruktur eine Antriebsmodus-Feder (109a-e) enthält, die die erste Shuttle-Masse (105a) mit dem zweiten Verankerungsstift (103c-f) verbindet.

**9.** Eine mikromechanische Sensoreinrichtung gemäß irgendeinem der Ansprüche 1 bis 8 **dadurch gekennzeichnet, dass** jeder der genannten Aufhängungsstrukturen bezogen auf die Zentralachse in Antriebsmodus-Richtung (x) symmetrisch ist.

**10.** Eine mikromechanische Sensoreinrichtung gemäß irgendeinem der Ansprüche 4 bis 9, **dadurch gekennzeichnet, dass** die Antriebsmodus-Federn (107a-d, 108a-d), die den Antriebs- Shuttle mit dem Zwischenbereich verbinden, elastische Träger sind, die in Sense-Modus-Richtung (y) verlaufen.

**11.** Eine mikromechanische Sensoreinrichtung gemäß irgendeinem der Ansprüche 4 bis 10, **dadurch gekennzeichnet, dass** die zweite und vierte Antriebsmodus-Feder der ersten und zweiten Aufhängungsstruktur jeweils aus zwei parallelen, elastischen Trägern gebildet werden, die in Sense-Modus-Richtung (y) verlaufen und an einem Ende miteinander verbunden sind.

**12.** Eine mikromechanische Sensoreinrichtung gemäß irgendeinem der Ansprüche 4 bis 11, **dadurch gekennzeichnet, dass** die Sense-Modus-Federn jeder Aufhängungsstruktur zwei parallele Träger (111a, 111b) umfassen, die in Antriebsmodus-Richtung (x) verlaufen.

**13.** Eine mikromechanische Sensoreinrichtung gemäß irgendeinem der Ansprüche 7 bis 12, **dadurch gekennzeichnet, dass** die Verankerungsstruktur der Shuttle-Masse mindestens ein Paar angrenzender Verankerungsstifte (103a/ 103b) umfasst.

**14.** Eine mikromechanische Sensoreinrichtung gemäß irgendeinem der Ansprüche 7 bis 13, **dadurch gekennzeichnet, dass** beide Schwingungsstrukturen einen rechtwinkligen Umfang haben und alle Verankerungsstifte (103a-h) innerhalb des Bereichs angeordnet sind, der vom rechtwinkligen Umfang der ersten Schwingungsstruktur bzw. der zweiten Schwingungsstrukturen umgeben ist.

**15.** Eine mikromechanische Sensoreinrichtung gemäß irgendeinem der Ansprüche 1 bis 14, **dadurch gekennzeichnet, dass** die erste und zweite Korrekturmasse (106a) in einer Öffnung (112) der ersten bzw. zweiten Shuttle-Masse (105a) angeordnet ist.

**16.** Eine mikromechanische Sensoreinrichtung gemäß irgendeinem der Ansprüche 1 bis 15, **dadurch gekennzeichnet, dass** sie Elektroden zur Quadraturfehlerkompensation umfasst.

## Revendications

**1.** Dispositif à capteur micromécanique destiné à mesurer une vitesse angulaire de l'axe z comprenant :

    a) un substrat (1) définissant un plan de substrat et un axe z perpendiculaire au plan de substrat,
    b) une première structure vibratoire (104a) comprenant une première masse-navette (105a) et une première masse-étalon (106a), la première masse-étalon (106a) étant couplée à la première masse-navette (105a) par au moins un premier ressort en mode détection (110a-d),
    c) une deuxième structure vibratoire (104b) comprenant une deuxième masse-navette (105b) et une deuxième masse-étalon (106b), la deuxième masse-étalon (106b) étant couplée à la deuxième masse-navette (105b) par au moins un deuxième ressort en mode détection,
    d) une première structure de suspension pour suspendre la première masse-navette (105a) au-dessus du substrat (1) de manière flexible dans une direction de mode entraînement (x),
    e) une deuxième structure de suspension pour suspendre la deuxième masse-navette (105b) au-dessus du substrat (1) de manière flexible dans une direction de mode entraînement (x),
    f) les première et deuxième masses-navettes (105a, 105b) suspendues au-dessus du substrat pour déplacement au moins dans la direction de mode entraînement (x), dans lequel la direction de mode entraînement et la direction de mode détection étant parallèles au plan de substrat,
    g) les première et deuxième structures vibratoires (104a, 104b) étant élastiquement couplées l'une à l'autre,
    h) une première et une deuxième structure d'électrode d'entraînement (120a) pour les première et deuxième masses-navettes, respectivement, pour générer des déplacements de mode entraînement desdites masses-navettes (105a, 105b) dans la direction de mode entraînement,

i) une première et une deuxième structure d'électrode de détection (115a, 115b, 116, 117, 118) pour les première et deuxième masses-étalons (106a), respectivement, pour détecter et/ou activer des déplacements de mode détection desdites masses-étalons (106a) dans la direction de mode détection,

**caractérisé en ce que**

j) le dispositif comporte des éléments structuraux séparés (110a-d, 111a-h) pour définir séparément d'abord la fréquence antiphase puis la séparation de fréquence en phase/antiphase du mode détection.

2. Dispositif à capteur micromécanique selon la revendication 1, **caractérisé en ce qu'**il comporte des éléments structuraux séparés (107a-d, 109a-d ; 108a-d) pour définir séparément la paire de fréquences suivantes : la fréquence antiphase et la séparation de fréquence en phase/antiphase du mode entraînement

3. Dispositif à capteur micromécanique selon la revendication 1 ou 2, **caractérisé en ce que** les éléments structuraux pour définir séparément la fréquence en phase et la fréquence antiphase du mode entraînement et/ou le mode détection comprennent des ressorts unidirectionnels (107a-d, 108a-d, 110a-d, 111a-h).

4. Capteur micromécanique selon l'une quelconque des revendications 1 à 3, **caractérisé en ce que**

   a) la première structure de suspension comprend une paire de premier et deuxième ressorts de mode entraînement agencés en série,
   b) la deuxième structure de suspension comprend une paire de troisième et quatrième ressorts de mode entraînement agencés en série,
   c) une structure de liaison (123a, 123b) relie une zone intermédiaire entre les premier et deuxième ressorts de mode entraînement de la première structure de suspension à une zone intermédiaire entre les troisième et quatrième ressorts de mode entraînement de la deuxième structure de suspension.

5. Capteur micromécanique selon l'une quelconque des revendications 1 à 4 **caractérisé en ce que**

   a) les première et deuxième masses-navettes sont suspendues au-dessus du substrat également pour un déplacement dans la direction de mode détection (y),
   b) le couplage des masses-navettes est tel qu'un déplacement antiphase des masses-navettes dans la direction de mode détection (y) est supprimé.

6. Dispositif à capteur micromécanique selon l'une quelconque des revendications 1 à 5, **caractérisé en ce que** les deux structures de suspension comprennent un ressort de mode détection (111a-d, 111e-h).

7. Dispositif à capteur micromécanique selon l'une quelconque des revendications 4 à 6, **caractérisé en ce qu'**il comprend une structure d'ancrage comprenant un premier montant d'ancrage (103a,b,g,h) fixé au substrat et **en ce que** le ressort de mode détection (111a-b) de la première structure de suspension est relié entre le premier montant d'ancrage (103a,b,g,h) et une extrémité de ladite paire de premier et deuxième ressorts de mode entraînement (107a, 108a) de ladite première structure de suspension, dans lequel l'autre extrémité de ladite paire de ressorts de mode entraînement est reliée à la première masse-navette (105a).

8. Dispositif à capteur micromécanique selon la revendication 7, **caractérisé en ce que** la structure d'ancrage comprend un deuxième montant d'ancrage (103c-f) et **en ce que** la première structure de suspension comprend un ressort de mode entraînement (109a-e) reliant la première masse-navette (105a) au deuxième montant d'ancrage (103c-f).

9. Dispositif à capteur micromécanique selon l'une quelconque des revendications 1 à 8, **caractérisé en ce que** chacune desdites structures de suspension est symétrique par rapport à un axe central dans la direction de mode entraînement (x).

10. Dispositif à capteur micromécanique selon l'une quelconque des revendications 4 à 9, **caractérisé en ce que** les ressorts de mode entraînement (107a-d, 108a-d) qui relient la navette d'entraînement à la zone intermédiaire sont des traverses élastiques s'étendant dans la direction de mode détection (y).

11. Dispositif à capteur micromécanique selon l'une quelconque des revendications 4 à 10, **caractérisé en ce que** les deuxième et quatrième ressorts de mode entraînement des première et deuxième structures de suspension sont chacun formés par deux traverses élastiques parallèles s'étendant dans la direction de mode détection (y) et reliées par l'une de leurs extrémités.

12. Dispositif à capteur micromécanique selon l'une quelconque des revendications 4 à 11, **caractérisé**

**en ce que** le ressort de mode détection de chaque structure de suspension comprend deux traverses parallèles (111a, 111b) s'étendant dans la direction de mode entraînement (x).

13. Dispositif à capteur micromécanique selon l'une quelconque des revendications 7 à 12, **caractérisé en ce que** la structure d'ancrage de la masse-navette comprend au moins une paire de montants d'ancrage adjacents (103a/103b).

14. Dispositif à capteur micromécanique selon l'une quelconque des revendications 7 à 13, **caractérisé en ce que** les deux structures vibratoires ont un périmètre rectangulaire et tous les montants d'ancrage (103a-h) sont agencés à l'intérieur de la zone qui est entourée par les périmètres rectangulaires de la première structure vibratoire et de la deuxième structure vibratoire, respectivement.

15. Dispositif à capteur micromécanique selon l'une quelconque des revendications 1 à 14, **caractérisé en ce que** les première et deuxième masses-étalons (106a) sont agencées dans une ouverture (112) des première et deuxième masses-navettes (105a), respectivement.

16. Dispositif à capteur micromécanique selon l'une quelconque des revendications 1 à 15, **caractérisé en ce qu'**il comprend des électrodes pour une compensation d'erreur en quadrature.

**Fig. 1**

Fig. 2a

Fig. 2b

Fig. 3a

Fig. 3b

Fig. 4a

Fig. 4b

Fig. 5a

Fig. 5b

**Fig. 6b**

**Fig. 6a**

**Fig. 7b**

**Fig. 7a**

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6230563 B
- US 20100139399 A
- US 20100116050 A
- US 2010313657 A
- US 6718825 B1
- US 6837108 A
- US 7036373 B
- US 7191653 B1